# FASCICULE DE BREVET EUROPEEN

(11) **EP 1 652 411 B1**
(45) Date de publication et mention de la délivrance du brevet: **27.08.2008**
(21) Numéro de dépôt: 04785994.7
(22) Date de dépôt: 23.07.2004
(51) Int. Cl.: H05B 41/282, H05B 41/24

(54) **DISPOSITIF D ALIMENTATION ELECTRIQUE DESTINE A ALIMENTER AU MOINS DEUX ELECTRODES**
ELEKTRISCHE STROMVERSORGUNG FÜR MINDESTENS ZWEI ELEKTRODEN
ELECTRIC POWER SUPPLY FOR AT LEAST TWO ELECTRODES

(30) Priorité: 23.07.2003 FR 0308977
(43) Date de publication de la demande: 03.05.2006
(73) Titulaire: SAINT-GOBAIN GLASS FRANCE, 92400 Courbevoie (FR)
(72) Inventeur: ZHANG, Jingwei, F-91300 Massy (FR); AUDAY, Guillaume, F-23600 Bussiere-Saint-Georges (FR); DURON, Didier, 23,boulevard Jean Jaurès, F- 92100 Boulogne Billancourt (FR); BERTIN-MOUROT, Thomas, 75013 Paris (FR); VISAGE, Philippe, F-78250 Oinville sur Montcient (FR)
(74) Mandataire: Cardin, Elise
(86) Numéro de dépôt international: PCT/FR2004/001971
(87) Numéro de publication internationale: WO 2005/011336

(56) Documents cités:
- EP-A- 0 374 617
- EP-A- 0 529 551
- EP-A- 1 176 853
- DE-A- 10 115 279
- DE-A- 19 839 336
- JP-A- 2001 217 090
- US-A- 4 633 141
- US-A- 5 239 234
- US-A1- 2002 093 295
- PATENT ABSTRACTS OF JAPAN vol. 2003, no. 10, 8 octobre 2003 (2003-10-08) & JP 2003 173889 A (HARISON TOSHIBA LIGHTING CORP), 20 juin 2003 (2003-06-20)

## Description

L'invention a pour objet un dispositif d'alimentation électrique fournissant en énergie une structure formant une lampe à barrière diélectrique et qui comporte au moins deux électrodes et un espace dans lequel règne un gaz, le dispositif d'alimentation comportant un générateur de tension, un transformateur pourvu d'un enroulement primaire et d'un enroulement secondaire, l'enroulement primaire étant connecté au générateur et l'enroulement secondaire étant relié aux deux électrodes pour les alimenter avec une tension périodique de fréquence donnée.

L'invention sera décrite pour l'alimentation électrique d'une source lumineuse du type lampe plane.

Les lampes planes sont généralement utilisées pour la fabrication de dispositifs à écran rétro-éclairé. Elles sont constituées de deux substrats en verre maintenus avec un faible écartement l'un par rapport à l'autre, généralement inférieur à quelques millimètres, et scellés hermétiquement de manière à renfermer un gaz sous pression réduite dans lequel une décharge électrique produit un rayonnement généralement dans le domaine ultraviolet qui excite une substance luminophore émettant alors de la lumière visible.

Dans une structure courante de lampe plane, un substrat en verre porte sur une même face deux revêtements sérigraphiés, notamment en argent, en forme de peignes interpénétrés constituant une cathode et une anode. Cette face est tournée vers l'espace contenant le gaz à plasma. Un autre substrat en verre est maintenu à distance du premier par l'intermédiaire d'espaceurs ponctuels et éventuellement d'un cadre périphérique. Il se produit entre l'anode et la cathode une décharge (un champ électrique) dite coplanaire, c'est-à-dire dans une direction longeant la surface principale du substrat verrier, décharge qui excite le gaz à plasma environnant.

Les électrodes sont protégées par un revêtement diélectrique destiné par limitation capacitive du courant à éviter une perte de matière des électrodes par bombardement ionique au voisinage du substrat verrier. Au moins une des faces des substrats verriers tournées vers l'espace renfermant le gaz est en outre porteuse d'un revêtement de matériau luminophore, du type couramment dénommé phosphores, qui sont excités grâce à l'ionisation du gaz et émettent ainsi de la lumière.

Cependant, dans une telle structure, les connecteurs électriques pour l'alimentation des électrodes doivent traverser l'enceinte hermétique contenant le gaz, ce qui nécessite un système complexe de connexion.

Une solution à ce problème de connexion est décrite dans la demande de brevet français FR 02/ 10020 qui divulgue une toute autre structure de lampe plane pour laquelle les électrodes sont non plus disposées à l'intérieur de l'enceinte et de manière coplanaire, mais à l'extérieur et destinées à engendrer un champ électrique transversal à la surface des électrodes.

Les électrodes sont par exemple agencées sur la face externe des substrats verriers à l'opposé du gaz et donc dans deux plans distincts. En outre, au moins une des électrodes est un élément conducteur translucide, la face supportant cette électrode formant une face éclairante pour la lampe plane.

Ainsi, en plaçant les électrodes à l'extérieur de l'enceinte, la connexion électrique est d'une part facilitée, et d'autre part, les substrats verriers font office d'une protection capacitive des électrodes contre le bombardement ionique du gaz.

De plus, cette dernière structure propose un élément éclairant plan susceptible de procurer des possibilités nouvelles en matière de décoration, d'affichage et/ou d'architecture.

Cette demande de brevet FR 02/ 10020 ne décrit pas par quels moyens les électrodes sont alimentées.

Un dispositif pouvant être utilisé est par exemple celui donné dans le brevet américain US 5 604 410. Ce dispositif d'alimentation comporte une source d'alimentation en tension délivrant une tension sous forme d'un train d'impulsions c'est-à-dire une tension qui périodiquement chute à une tension sensiblement nulle pendant un laps de temps. Ce dispositif comporte en outre un amplificateur de tension reliée à la source de tension et un transformateur dont l'enroulement primaire est relié à l'amplificateur et l'enroulement secondaire est connecté aux électrodes pour leur alimentation.

La puissance électrique nécessaire avec le dispositif de ce brevet américain serait, notamment à partir de dimensions de lampes proches ou supérieures au m², bien trop importante à fournir, et en outre nécessite un dispositif bien trop encombrant.

Par ailleurs, on connaît du document JP2001217090 un circuit pourvu d'un transformateur et d'un condensateur pour alimenter et augmenter la production d'UV d'une lampe à décharge à partir d'une source d'alimentation.

L'invention a pour but de fournir un dispositif d'alimentation électrique pour électrodes qui permet de limiter la consommation électrique et qui convient à tout type de structure formant une lampe à alimenter.

A cet effet, l'invention propose un assemblage comprenant une structure formant une lampe à barrière diélectrique et un dispositif d'alimentation électrique pour fournir en énergie la structure qui comporte au moins deux électrodes et un espace dans lequel règne un gaz destiné à être excité, le dispositif comportant un générateur de tension, un transformateur pourvu d'un enroulement primaire et d'un enroulement secondaire, l'enroulement primaire étant connecté au générateur et l'enroulement secondaire étant relié aux deux électrodes pour les alimenter avec une tension périodique de fréquence donnée, le dispositif comprenant des moyens dits de résonance pour fixer ladite fréquence due la tension périodique sensiblement à la fréquence de résonance f_{R} du système qui est constitué de la structure et de l'enroulement secondaire , la structure formant lampe étant une lampe plane comportant deux diélectriques qui sont associés respectivement aux deux électrodes et qui sont mis en regard et écartés de façon à créer l'espace dans lequel règne le gaz, et en ce que le générateur est relié à l'opposé du transformateur au secteur et les moyens de résonance comprennent un interrupteur disposé sur le chemin du générateur à l'enroulement primaire du transformateur, et un système de pilotage relié à l'interrupteur de façon à commander son ouverture et sa fermeture selon une période T, ladite fermeture étant de durée dt et déclenchée au choix l'un des instants suivants :
- au passage à zéro du courant traversant la structure,
- au passage de ladite tension à une tension seuil,
- à un niveau de lumière seuil,
- au passage à un courant seuil du courant traversant la structure.

Ainsi, la résonance réduit la consommation électrique.

Le dispositif selon l'invention peut être utilisé pour toute structure de lampe plane (toute disposition des électrodes) et toute valeur capacitive de la structure. La fréquence de résonance f_{R} est définie par l'inductance et la capacité de la structure.

Dans une configuration de lampe plane déjà décrite plus haut et divulguée dans la demande de brevet français FR 02/ 10020 la capacité de la structure est déterminée principalement par les capacités des diélectriques que sont les substrats verriers.

Par exemple, les dimensions de telles lampes planes sont de 100 mm par 100 mm ou 1000 mm par 1000 mm, soit des capacités environ égales à 30pF ou 3000pF respectivement.

La fréquence de résonance f_{R} est définie par l'inductance du dispositif d'alimentation et la capacité de la structure déterminée par les capacités des deux barrières diélectriques, de celle du gaz (dépend notamment de sa hauteur) et éventuellement de la capacité d'un diélectrique à traiter. Ainsi, la capacité totale peut varier sur une large gamme entre 150pF à 1000pF.

Par ailleurs, pour les lampes planes, la puissance peut être comprise entre 10W et 200W en fonction du niveau d'éclairage souhaité et de la dimension de la lampe. Les composants du dispositif d'alimentation électrique sont donc choisis pour une tenue en puissance.

La résonance est de type secondaire et est rendue possible par un système intelligent d'ouverture et de fermeture de l'interrupteur.

Pendant la durée dt, la structure est alimentée en tension par une source d'énergie, le générateur, qui lui est extérieur. L'enroulement secondaire du transformateur emmagasine de l'énergie et les capacités des diélectriques se chargent pendant cette fermeture de l'interrupteur.

Aussi, à l'ouverture de l'interrupteur, ce qui bloque l'arrivée de tension depuis la source d'énergie externe qu'est le générateur, la structure continue d'être quand même alimentée en tension par une source d'énergie qu'on peut qualifier d'interne et qui correspond à un circuit d'alimentation fermé constitué par les capacités des diélectriques qui déchargent leur énergie et l'enroulement secondaire du transformateur qui restitue son énergie en oscillant à la fréquence f_{R}.

De cette manière, l'énergie extraite du générateur et donc du réseau électrique est réduite par rapport à celle nécessaire à partir des dispositifs d'alimentation de l'art antérieur, conduisant donc à une économie d'énergie.

Plus précisément, au passage par zéro du courant traversant la structure, l'énergie fournie par le système constitué des capacités des diélectriques et du transformateur est épuisée, aussi de l'énergie nouvelle est apportée par la source externe qu'est le générateur.

De la même façon, à un passage de la tension d'alimentation à une tension seuil correspondant par exemple à la tension nécessaire pour déclencher une décharge dans la lampe, la lampe va émettre de la lumière par l'énergie nouvelle apportée par la source externe qu'est le générateur.

Cette tension seuil peut être prédéterminée ou fixée par un opérateur, et être en outre ajustable dans le temps.

Dans l'art antérieur précité, la période du train d'impulsions, l'amplitude de la tension et le temps durant lequel la tension est nulle sont des paramètres qui sont fonction de la géométrie des électrodes, ainsi que du type et de l'épaisseur des diélectriques séparant le gaz des électrodes. De ce fait, il est nécessaire de réaliser un dispositif d'alimentation distinct en fonction de la configuration de chaque type de lampe, les caractéristiques portant sur la tension et le temps d'alimentation étant adaptées à chaque dispositif.

Il conviendrait donc avec une telle alimentation de fabriquer une multitude de sortes de dispositifs d'alimentation, chaque sorte convenant pour un type de lampe plane particulier avec des caractéristiques différentes selon les dimensions de la lampe, le gaz et son volume, sa puissance nécessaire d'alimentation.

Or, il est difficilement envisageable pour une fabrication en série de diverses lampes, de concevoir un dispositif particulier pour chaque type de lampe, les coûts de fabrication seraient trop élevés engendrant des prix de revient pour les lampes trop onéreux vis-à-vis du consommateur.

Or, dans ce deuxième mode, l'alimentation de n'importe quelle structure, c'est-à-dire quelles que soient ses dimensions (capacités des diélectriques), est assurée grâce à ce dispositif qui adapte automatiquement la période du signal de tension et est de taille réduite.

Selon une caractéristique, le dispositif d'alimentation peut comporter des moyens de mesure du courant fournissant au système de pilotage une image du courant traversant la structure, la fermeture de l'interrupteur selon la période T étant déclenchée lors du passage par zéro du courant.

Selon une autre caractéristique, le dispositif d'alimentation peut comporter des moyens de mesure de ladite tension qui sont couplés au système de pilotage, la fermeture de l'interrupteur selon la période T étant déclenchée lors du passage de ladite tension à ladite tension seuil

De préférence, la durée de fermeture dt de l'interrupteur peut être réglable en fonction de l'énergie à fournir à la structure.

Pendant la fermeture, une variation brutale de la tension permet obtenir un courant impulsionnel traversant la lampe suffisant pour l'allumage de la lampe. L'intensité et le sens de cette variation brutale est choisie en fonction de l'instant de déclenchement de la fermeture et de la durée dt de la fermeture.

Cette variation brutale peut conduire par exemple à une augmentation de l'amplitude de la tension, par exemple en créant une «rampe» de tension positive (ou négative respectivement) au passage à une valeur de tension seuil positive (ou négative respectivement )

Cette variation brutale peut aussi conduire au passage d'une tension seuil positive donnée à la valeur négative correspondante.

La variation brutale de la tension peut être obtenue par exemple en appliquant à l'enroulement primaire une tension continue d'amplitude sensiblement stable pendant la durée dt et qui est coupée après, formant ainsi une impulsion d'une durée dt.

De préférence, la tension peut être symétrique par rapport à 0 pour un bon écoulement des charges.

La fréquence varie donc en fonction des systèmes, par exemple de 10 kHz à quelques MHz

De préférence, ladite fréquence (donc sensiblement la fréquence de résonance) est comprise entre 10 et 300 kHz, de préférence entre 40 et 50 kHz pour une meilleure décharge.

On choisit par exemple une valeur d'inductance (correspondant à celle de l'enroulement secondaire en présence du transformateur) en fonction de la capacité de la structure pour que la fréquence de résonance soit dans la gamme avantageuse précitée.

Dans un mode de réalisation avantageux, la structure forme une lampe plane pour système de rétroéclairage ou une lampe plane d'éclairage architectural, décoratif et/ou de signalisation.

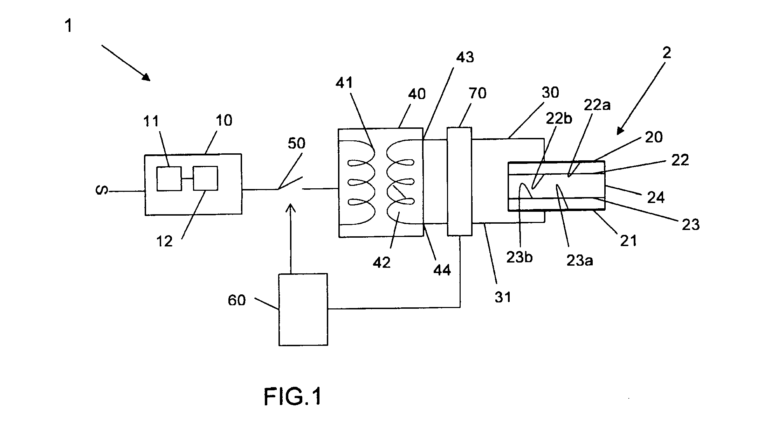

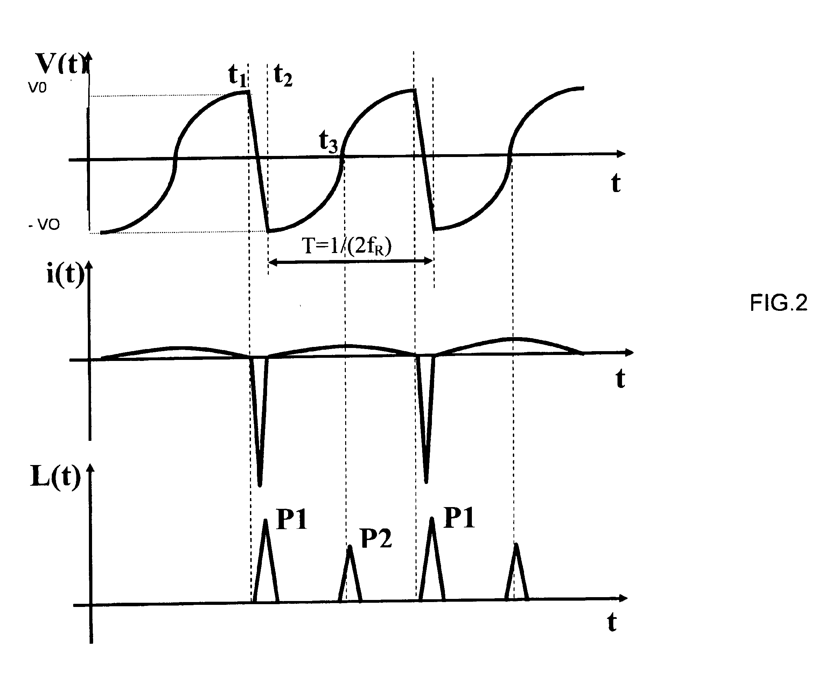

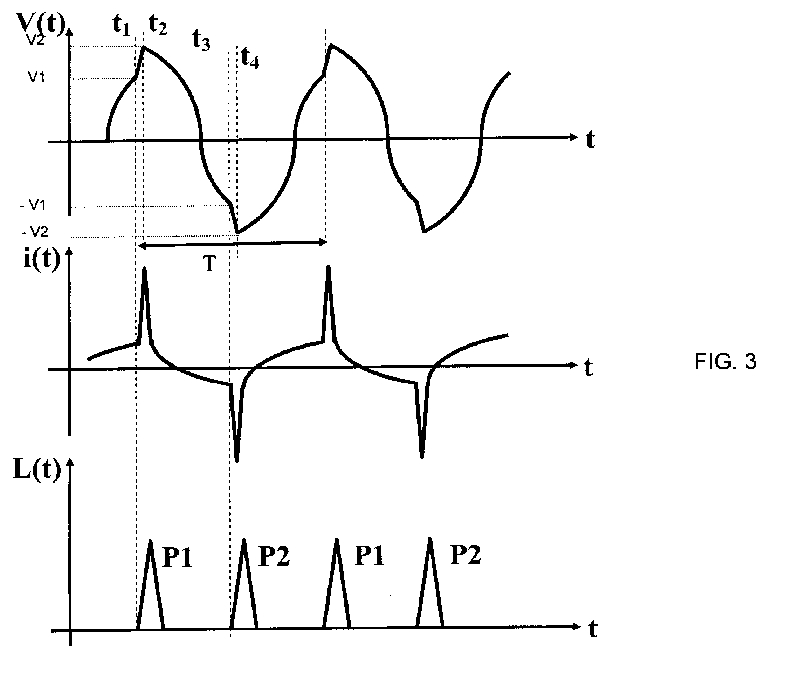

L'invention va à présent être décrite plus en détail en regard des dessins annexés sur lesquels :
■ La figure 1 montre un schéma du dispositif d'alimentation électrique associé à une structure à alimenter par exemple du type lampe planen dans un premier mode de réalisation de l'invention.
■ La figure 2 illustre en fonction du temps, la tension aux bornes de la structure de type lampe plane, le courant dans la lampe et l'énergie lumineuse fournit par la lampe en liaison avec le premier mode de réalisation.
■ La figure 3 illustre en fonction du temps, la tension aux bornes de la structure de type lampe plane, le courant dans la lampe et l'énergie lumineuse fournit par la lampe, en liaison avec une variante du premier mode de réalisation.

La figure 1 illustre un dispositif d'alimentation électrique 1 selon l'invention apte à alimenter en énergie électrique au moins deux électrodes 20, 21 d'une structure 2 dans un premier mode de réalisation.

La structure 2 comporte les électrodes 20, 21, deux éléments diélectriques 22, 23 écartés et mis en regard et sur chacun desquels est disposée une des électrodes, et au moins un gaz 24 contenu dans l'espace séparant les deux éléments diélectriques, les électrodes étant associées dans cet exemple de structure aux faces externes 22a, 23a des éléments diélectriques à l'opposé des faces 22b, 23b en regard du gaz. Les éléments diélectriques présentent une capacité qui est fonction de la surface des électrodes qui leur sont associées.

Cette structure peut constituer par exemple une lampe plane. Dans ce cas, la structure en tant que telle est hermétique.

Elle comporte en tant qu'éléments diélectriques 22, 23 deux substrats en verre qui sont maintenus écartés l'un par rapport à l'autre selon un espace inférieur à quelques millimètres au moyen d'espaceurs et scellés l'un à l'autre par un cadre en fritte de verre. Les faces externes des feuilles de verre sont recouvertes par les électrodes 20, 21, et la face interne d'au moins un substrat en verre est revêtue d'un matériau luminophore.

Le gaz 24 remplissant l'espace entre les deux substrats en verre règne à pression réduite, en général de l'ordre de quelques dixièmes d'atmosphère, et est par exemple constitué par du xénon ou éventuellement en mélange avec du néon. Enfin, les électrodes 20, 21 sont formées de manière connue par des couches conductrices.

Pour de plus amples détails sur cette configuration de lampe plane, on se réfèrera à la demande de brevet français FR 02/ 10020.

Les électrodes 20 et 21 de la structure 2 sont reliées par des connecteurs 30 et respectivement 31, tels que des clinquants souples, au dispositif d'alimentation électrique 1.

Le dispositif d'alimentation électrique 1 comporte un générateur de tension 10, un transformateur 40 connecté entre le générateur de tension 10 et les deux électrodes 20, 21, un interrupteur 50 de type électronique connecté entre le générateur de tension 10 et le transformateur 40, l'interrupteur 50 étant destiné à être ouvert ou fermé pour alimenter ou non le transformateur, un système de pilotage 60 de l'interrupteur 50 apte à commander son ouverture et sa fermeture, et des moyens de mesure 70 du courant sur le chemin de la structure 2 entre le transformateur et ladite structure.

Le générateur de tension 10 est connecté en amont au secteur qui délivre une tension de 220 Volts monophasée avec une fréquence de 50 Hz. Ce générateur comporte de manière connue d'amont en aval, un bloc 11 de filtrage CEM (Compatibilité Electromagnétique) qui sert à filtrer la tension du secteur en isolant les bruits, et un bloc redresseur 12 qui permet de délivrer une tension continue d'amplitude sensiblement stable, choisie négative dans cette configuration, des moyens de protection des composants électroniques étant inclus dans ce générateur.

Le transformateur 40 comporte un enroulement primaire 41 qui est connecté au bloc redresseur 12 du générateur de tension, et un enroulement secondaire 42 dont les bornes 43, 44 sont connectées aux électrodes 20, 21 via les connecteurs 30 et respectivement 31.

L'interrupteur 50 connecté entre le générateur 10 et le transformateur 40 sert à alimenter séquentiellement le transformateur au moyen du système de pilotage 60. Ce système de pilotage 60 génère une période de commutation T de l'interrupteur 50 telle que T=1/(2f_{R}), avec f_{R} la fréquence de résonance du système -structure 2 et enroulement secondaire 42 du transformateur 40.

La fréquence de résonance f_{R} est définie par l'inductance de sortie du transformateur 40 et la capacité de la structure 2, la capacité de la structure étant déterminée principalement par les capacités des diélectriques 22 et 23 que sont les substrats verriers.

La fermeture de l'interrupteur à chaque période T=1/(2f_{R}) permet d'alimenter en tension la structure 2 depuis une source d'alimentation externe (le générateur 10) aux périodes exactes où elle en a besoin pour son fonctionnement, par exemple pour une lampe plane, à chaque fois que la lampe est prête à s'éteindre. Ainsi, la structure n'a pas besoin d'être alimentée en continu à partir de cette source externe, permettant d'économiser de l'énergie.

Du fait que cette période est fonction de la fréquence du système, le moment de fermeture est optimisé, la conduction n'a pas besoin de se faire de manière anticipée alors que la structure n'a pas encore besoin d'un apport extérieur de tension.

La fréquence de résonance f_{R} est liée aux caractéristiques de la structure 2: nature des diélectriques, distance entre les diélectriques, épaisseur des diélectriques, surface et nature des électrodes et à l'inductance de sortie du transformateur et est par exemple choisie entre 40 et 50 kHz. L'interrupteur 50 reste fermé pendant une durée dt, c'est-à-dire qu'il est passant pendant cette durée au cours de laquelle une émission lumineuse de la lampe est produite, c'est-à-dire pendant le temps d'éclairage de la lampe. Plus cette durée dt est longue, plus l'énergie lumineuse de la lampe est importante. Avantageusement, il est possible de régler manuellement cette durée dt pour contrôler justement la luminosité de la lampe.

Les moyens de mesure du courant 70 placés entre l'enroulement secondaire du transformateur et la structure 2 restituent au système de pilotage 60, l'image du courant traversant la structure 2. Aussi, le passage par zéro du courant entraîne automatiquement la fermeture de l'interrupteur 50.

Le dispositif de l'invention va à présent être décrit en regard de la figure 2 et en référence à titre d'exemple pour l'alimentation d'une structure 2, à l'alimentation d'une lampe plane en vue de son allumage.

La figure 2 illustre en fonction du temps, la tension V(t) aux bornes de l'enroulement secondaire du transformateur, c'est-à-dire la tension aux bornes de la lampe, le courant i(t) dans la lampe et l'énergie lumineuse L(t) fournit par la lampe.

Au temps t₁, le courant i(t) est égal à 0 et la tension V(t) est égale à V0, l'interrupteur 50 est mis en position fermée de sorte qu'il conduit pour alimenter en tension l'enroulement primaire 41 du transformateur à partir du générateur 10.

La tension fournie à l'enroulement primaire du transformateur est transformée dans l'enroulement secondaire qui alimente alors la lampe, c'est-à-dire les deux électrodes 20 et 21. L'amplitude de V(t) c'est-à-dire V0 est égale ou supérieure à la tension nécessaire pour l'ionisation du gaz.

Pour les lampes planes, l'amplitude de V(t) peut être par exemple comprise entre 300V et 3kV, typiquement de l'ordre de 1 à 2kV.

La conduction effectuée pendant la durée dt permet par ailleurs de stocker de l'énergie dans l'enroulement secondaire du transformateur, énergie qui est proportionnelle au temps de conduction dt de l'interrupteur, et de charger en énergie les capacités des deux diélectriques 22, 23.

Toujours pendant cette durée dt, le gaz étant ionisé, d'une part, un courant impulsionnel i(t) traverse la lampe, et d'autre part, l'allumage de la lampe se produit ce qui se traduit par le pic P1 de l'énergie lumineuse L(t).

A l'instant t₂, c'est-à-dire au bout du temps dt=t₂-t₁, durée attribuée par le constructeur ou l'utilisateur, V(t) est égale à -V0.

Le système de pilotage 60 ouvre l'interrupteur 50. L'enroulement primaire du transformateur n'est alors plus alimenté, et l'énergie emmagasinée dans l'enroulement secondaire du transformateur et l'énergie chargée dans les capacités des diélectriques est alors restituée à la lampe selon une tension d'alimentation sinusoïdale V(t) oscillant à la fréquence de résonance f_{R} du système formée de la structure 2 et d'un enroulement secondaire 42 du transformateur, un courant i(t) pouvant continuer à circuler au travers de la structure 2.

Au voisinage du passage par zéro de la tension d'alimentation V(t) soit à l'instant t₃, la tension aux bornes des éléments diélectriques, qui est égale à l'amplitude de V(t), s'applique inversement sur le gaz, ionisant à nouveau le gaz pour engendrer un nouvel éclairage de la lampe (pic P2 de l'énergie lumineuse L(t)).

La tension V(t) continue d'évoluer jusqu'au temps t₁+T, avec T=1/(2f_{R}) qui correspond à la détection du passage du courant i(t) par zéro, pour lequel le gaz n'étant plus suffisamment ionisé la lampe n'éclaire plus.

De manière à assurer un nouvel éclairage de la lampe, il convient de fermer à nouveau l'interrupteur 50 à cet instant t₁+T de détection du passage par zéro du courant. Le système de pilotage 60 ferme donc à nouveau l'interrupteur 50 ce qui assure durant la nouvelle durée dt une nouvelle alimentation du transformateur et donc de la lampe, engendrant une nouvelle ionisation et un nouvel éclairage (nouveau pic P1), avec une nouvelle charge des diélectriques.

Ces opérations de fermeture et d'ouverture de l'interrupteur 50 sont réitérées durant le temps désiré d'alimentation des électrodes de la lampe, c'est-à-dire durant le temps désiré d'allumage de la lampe.

Ainsi par la mesure du courant, le système de pilotage 60 permet de commander exactement le moment auquel il convient de reprendre l'alimentation des électrodes de la structure. Aussi, il est possible de brancher n'importe quelle structure 2 avec des caractéristiques propres d'impédance, et le dispositif d'alimentation 1 de l'invention après ouverture de l'interrupteur 50 déclenchera automatiquement sa nouvelle fermeture dès le passage par zéro du courant, instant correspondant à un période de commutation T égale à 1/(2f_{R}), f_{R} la fréquence de résonance du système -structure 2 et enroulement secondaire 42 du transformateur 40.

Dans une variante de ce premier mode de réalisation, le dispositif d'alimentation 1 de l'invention déclenche automatiquement la fermeture de l'interrupteur 50 lorsque V(t)=V0, tension seuil mesurée par des moyens appropries remplaçant les moyens 70, cet instant correspondant à un période de commutation T égale à 1/(2f_{R}).

La figure 3 illustre en fonction du temps, la tension aux bornes de la structure par exemple de type lampe plane, le courant dans la lampe et l'énergie lumineuse fournit par la lampe, en liaison avec une variante du premier mode de réalisation.

Des moyens de mesure de la tension V(t) remplacent les moyens de mesure du courant 70.

Au temps t₁, la tension aux bords de la lampe est V1 qui correspond à une première tension seuil pour une commutation, l'interrupteur 50 est mis en position fermée de sorte qu'il conduit pour alimenter en tension l'enroulement primaire du transformateur à partir du générateur 10 qui fournit alors une tension positive.

Cette tension fournie à l'enroulement primaire du transformateur est transformée dans l'enroulement secondaire qui alimente alors la lampe, c'est-à-dire les deux électrodes 20 et 21.

La conduction effectuée pendant la durée dt permet par ailleurs de stocker de l'énergie dans l'enroulement secondaire du transformateur, énergie qui est proportionnelle au temps de conduction dt de l'interrupteur, et de charger en énergie les capacités des deux diélectriques 22, 23.

Toujours pendant cette durée dt, le gaz étant ionisé, d'une part, un courant impulsionnel i(t) traverse la lampe, et d'autre part, l'allumage de la lampe se produit ce qui se traduit par le pic P1 de l'énergie lumineuse L(t).

A l'instant t₂, c'est-à-dire au bout du temps dt=t₂-t₁, durée attribuée par le constructeur ou l'utilisateur, la tension aux bords de la lampe V(t) et égale à V2 qui est supérieure ou égale à la tension nécessaire pour l'ionisation du gaz. Le système de pilotage 60 ouvre alors l'interrupteur 50.

L'enroulement primaire du transformateur n'est alors plus alimenté, et l'énergie emmagasinée dans l'enroulement secondaire du transformateur et l'énergie chargée dans les capacités des diélectriques est alors restituée à la lampe selon une tension d'alimentation sinusoïdale V(t) oscillant à la fréquence de résonance f_{R} du système formé de la lampe 2 et de l'enroulement secondaire 42 du transformateur, un courant i(t) pouvant continuer à circuler au travers de la lampe.

La tension V(t) continue d'évoluer jusqu'au temps t₃, qui correspond à une deuxième tension seuil -V1 pour une commutation. L'interrupteur 50 est mis alors en position fermée de sorte qu'il conduit pour alimenter en tension l'enroulement primaire du transformateur à partir du générateur 10 qui fournit alors une tension négative.

Cette tension fournie à l'enroulement primaire du transformateur est transformée dans l'enroulement secondaire qui alimente alors la lampe, c'est-à-dire les deux électrodes 20 et 21.

La conduction effectuée pendant la durée dt=t₄-t₃ permet par ailleurs de stocker de l'énergie dans l'enroulement secondaire du transformateur, énergie qui est proportionnelle au temps de conduction dt de l'interrupteur, et de charger en énergie les capacités des deux diélectriques 22, 23.

Toujours pendant cette durée dt, le gaz étant ionisé, d'une part, un courant impulsionnel i(t) traverse la lampe, et d'autre part, l'allumage de la lampe se produit ce qui se traduit par le pic P2 de l'énergie lumineuse L(t).

A l'instant t₄, c'est-à-dire au bout du temps dt, durée attribuée par le constructeur ou l'utilisateur, la tension aux bords de la lampe V(t) est égale à -V2. Le système de pilotage 60 ouvre alors l'interrupteur 50.

A nouveau, l'enroulement primaire du transformateur n'est alors plus alimenté, et l'énergie emmagasinée dans l'enroulement secondaire du transformateur et l'énergie chargée dans les capacités des diélectriques est alors restituée à la lampe selon une tension d'alimentation sinusoïdale V(t) oscillant à la fréquence de résonance f_{R} du système - lampe 2 et enroulement secondaire 42 du transformateur, un courant i(t) pouvant continuer à circuler au travers de la lampe.

La tension V(t) continue d'évoluer jusqu'au temps t₁+T. De manière à assurer un nouvel éclairage de la lampe, il convient de fermer à nouveau l'interrupteur 50 à cet instant t₁+T. Le système de pilotage 60 ferme donc à nouveau l'interrupteur 50 ce qui assure durant la nouvelle durée dt une nouvelle alimentation du transformateur et donc de la lampe, engendrant une nouvelle ionisation et un nouvel éclairage (nouveau pic P1), avec une nouvelle charge des diélectriques.

De manière similaire, il convient de fermer à nouveau l'interrupteur 50 à l'instant t₃+T, dans la partie négative de V(t).

Ces opérations de fermeture et d'ouverture de l'interrupteur 50 sont réitérées durant le temps désiré d'alimentation des électrodes de la lampe, c'est-à-dire durant le temps désiré d'allumage de la lampe.

Ainsi par la mesure de la tension seuil V1 (-V1 respectivement), le système de pilotage 60 permet de commander exactement le moment auquel il convient de reprendre l'alimentation des électrodes de la structure.

Aussi, il est possible de brancher n'importe quelle structure 2 avec des caractéristiques propres d'impédance, et le dispositif d'alimentation 1 après ouverture de l'interrupteur 50 déclenchera automatiquement sa nouvelle fermeture dès l'une des valeurs V1 ou -V1 atteinte.

La période T dépend de la tension seuil V1 (-V1 respectivement) et de l'amplitude V2 (-V2 respectivement). Pour V1=V2, on obtient une sinusoide parfaite et T=1/f_{R}. Pour V1=V2/2, on obtient T=0,75/f_{R}.

## Revendications

1. Assemblage comprenant une structure (2) formant une lampe à barrière diélectrique et un dispositif d'alimentation électrique (1, 1') pour fournir en énergie la structure (2) qui comporte au moins deux électrodes (20, 21) et un espace dans lequel règne un gaz (24) destiné à être excité, le dispositif comportant un générateur de tension (10), un transformateur (40) pourvu d'un enroulement primaire (41) et d'un enroulement secondaire (42), l'enroulement primaire étant connecté au générateur (10) et l'enroulement secondaire étant relié aux deux électrodes (20, 21) pour les alimenter avec une tension périodique (V(t)) de fréquence donnée, le dispositif comprenant des moyens dits de résonance pour fixer la fréquence de la tension périodique (V(t)) sensiblement à la fréquence de résonance f_{R} du système qui est constitué de la structure (2) et de l'enroulement secondaire (42), **caractérisé en ce que** la structure (2) formant lampe est une lampe plane comportant deux diélectriques (22, 23) qui sont associés respectivement aux deux électrodes (20,21) et qui sont mis en regard et écartés de façon à créer l'espace dans lequel règne le gaz, et **en ce que** le générateur (10) est relié à l'opposé du transformateur (40) au secteur et les moyens de résonance comprennent un interrupteur (50) disposé sur le chemin du générateur (10) à l'enroulement primaire (41) du transformateur, et un système de pilotage (60) relié à l'interrupteur (50) de façon à commander son ouverture et sa fermeture selon une période T, ladite fermeture étant de durée dt et déclenchée au choix l'un des instants suivants :
- au passage à zéro du courant traversant la structure,
- au passage de ladite tension à une tension seuil (V1, -V1),
- à un niveau de lumière seuil,
- au passage à un courant seuil du courant traversant la structure.

2. Assemblage selon la revendication 1, **caractérisé en ce que** le dispositif d'alimentation comporte des moyens de mesure du courant (70) fournissant au système de pilotage (60) une image du courant traversant la structure, la fermeture de l'interrupteur selon la période T étant déclenchée lors du passage par zéro du courant.

3. Assemblage selon la revendication 1, **caractérisé en ce que** le dispositif d'alimentation comporte des moyens de mesure de ladite tension qui sont couplés au système de pilotage, la fermeture de l'interrupteur selon la période T étant déclenchée lors du passage de ladite tension à ladite tension seuil (V1, -V1).

4. Assemblage selon la revendication 1, **caractérisé en ce que** la durée de fermeture (dt) de l'interrupteur (50) est réglable en fonction de l'énergie à fournir à la structure (2).

5. Assemblage selon l'une des revendications 1 à 4 **caractérisé en ce que** la fréquence est comprise entre 10 et 300 kHz, de préférence entre 40 et 50 kHz.

6. Assemblage selon l'une des revendications 1à 5, **caractérisé en ce que** la structure forme une lampe plane pour système de rétroéclairage ou une lampe plane d'éclairage architectural, décoratif et/ou de signalisation.

## Claims

1. An assembly comprising a structure (2) forming a dielectric barrier discharge lamp and an electrical supply device (1, 1') in order to deliver energy to the structure (2) that includes at least two electrodes (20, 21) and a space containing a gas (24) intended to be excited, the device comprising a voltage generator (10), a transformer (40) provided with a primary winding (41) and with a secondary winding (42), the primary winding being connected to the generator (10) and the secondary winding being connected to the two electrodes (20, 21) in order to supply them with a periodic voltage (V(t)) of given frequency, the device including what are called resonance means for fixing the frequency of the periodic voltage (V(t)) at substantially the resonant frequency f_{R} of the system, which consists of the structure (2) and the secondary winding (42), **characterized in that** the structure (2) forming a lamp is a flat lamp including two dielectrics (22, 23) which are associated respectively with the two electrodes (20, 21) and which are facing and spaced apart so as to create the space containing the gas, and **in that** the generator (10) is connected to the mains on the opposite side to the transformer (40) and the resonance means comprise a switch (50), which is placed in the path from the generator (10) to the primary winding (41) of the transformer, and a control system (60) connected to the switch (50) so as to open and close the switch over a period T, the closing of said switch, which is closed for a duration dt, being triggered by choice at one of the following instants:
- at the zero crossing of the current flowing through the structure;
- when said voltage crosses a threshold voltage (V1, -V1);
- at a threshold light level;
- when the current flowing through the structure crosses a threshold current.

2. The assembly as claimed in claim 1, **characterized in that** the supply device includes means (70) for measuring the current that delivers, to the control system (60), an image of the current flowing through the structure, the closing of the switch within the period T being triggered at the current zero crossing.

3. The assembly as claimed in claim 1, **characterized in that** the supply device includes means for measuring said voltage, said means being coupled to the control system, the closing of the switch within the period T being triggered when said voltage crosses said threshold voltage (V1, -V1).

4. The assembly as claimed in claim 1, **characterized in that** the duration (dt) of the time during which the switch (50) is closed can be adjusted according to the energy to be delivered to the structure (2).

5. The assembly as claimed in one of claims 1 to 7, **characterized in that** the frequency is between 10 and 300 kHz, preferably between 40 and 50 kHz.

6. The assembly as claimed in one of claims 1 to 5, **characterized in that** the structure forms a flat lamp for a backlighting system or a flat lamp for architectural, decorative and/or indicating illumination.

## Patentansprüche

1. Verbund, der eine Struktur (2), die eine Lampe mit dielektrischer Barriere bildet, und eine elektrische Versorgungseinrichtung (1, 1') umfasst, um Energie der Struktur (2) zu liefern, die mindestens zwei Elektroden (20, 21) und einen Zwischenraum umfasst, in welchem ein Gas (24) herrscht, das vorgesehen ist, angeregt zu werden, wobei die Einrichtung einen Spannungsgenerator (10) und einen Transformator (40), der mit einer primären Wicklung (41) und einer sekundären Wicklung (42) versehen ist, umfasst, die primäre Wicklung an den Generator (10) angeschlossen und die sekundäre Wicklung mit den zwei Elektroden (20, 21) verbunden ist, um sie mit einer periodischen Spannung (V(t)) mit einer gegebenen Frequenz zu versorgen, und die Einrichtung Resonanzmittel umfasst, um die Frequenz der periodischen Spannung (V(t)) im Wesentlichen auf der Resonanzfrequenz f_{R} des Systems zu halten, das von der Struktur (2) und der sekundären Wicklung (42) gebildet wird, **dadurch gekennzeichnet, dass** die die Lampe bildende Struktur (2) einen plane Lampe ist, die zwei Dielektrika (22, 23) umfasst, die jeweils mit einer der zwei Elektroden (20, 21) verbunden und derart einander zugewandt und beabstandet sind, dass der Zwischenraum geschaffen wird, in welchem das Gas herrscht, **und dass** der Generator (10) von dem Transformator (40) abgewandt mit dem Stromnetz verbunden ist, die Resonanzmittel einen Unterbrecher (50) umfassen, der im Weg von dem Generator (10) zu der primären Wicklung (41) des Transformators angeordnet ist, und ein Steuerungssystem (60) mit dem Unterbrecher (50) derart verbunden ist, dass dessen Öffnung und Schließung in einer Periode T gesteuert wird, wobei die Schließung die Dauer dt hat und mit der Wahl eines der folgenden Momente ausgelöst wird bei:
- Durchgang des durch die Struktur fließenden Stroms durch Null,
- Erreichen dieser Spannung einer Grenzspannung (V1, -V1),
- einem Grenzwert des Lichts und
- Erreichen eines Grenzstroms des durch die Struktur fließenden Stroms.

2. Verbund nach Anspruch 1, **dadurch gekennzeichnet, dass** die Versorgungseinrichtung Mittel (70) zur Strommessung umfasst, die dem Steuersystem (60) eine Abbildung des durch die Struktur fließenden Stroms liefern, wobei die Schließung des Unterbrechers während der Periode T beim Durchgang des Stroms durch Null ausgelöst wird.

3. Verbund nach Anspruch 1, **dadurch gekennzeichnet, dass** die Versorgungseinrichtung Mittel zur Messung der Spannung, die an das Steuersystem gekoppelt sind, umfasst, wobei das Schließen des Unterbrechers während der Periode T beim Erreichen dieser Spannung der Grenzspannung (V1, -V1) ausgelöst wird.

4. Verbund nach Anspruch 1, **dadurch gekennzeichnet, dass** die Dauer (dt) des Schließens des Unterbrechers (50) in Abhängigkeit von der der Struktur (2) zu liefernden Energie regelbar ist.

5. Verbund nach einem der Ansprüche 1 bis 4, **dadurch gekennzeichnet, dass** die Frequenz 10 bis 300 kHz und vorzugsweise zwischen 40 und 50 kHz beträgt.

6. Verbund nach einem der Ansprüche 1 bis 5, **dadurch gekennzeichnet, dass** die Struktur eine plane Lampe für ein Rückbeleuchtungssystems oder eine plane Lampe für eine architektonische, dekorative und/oder signalgebende Beleuchtung bildet.
